# EUROPEAN PATENT SPECIFICATION

(11) **EP 0 408 121 B1**
(45) Date of publication and mention of the grant of the patent: **14.06.1995**
(21) Application number: 90201799.5
(22) Date of filing: 05.07.1990
(51) Int. Cl.: H05B 41/29, H05B 41/392

(54) **Circuit arrangement**
Schaltungsanordnung
Circuit

(30) Priority: 10.07.1989 US 377499
(43) Date of publication of application: 16.01.1991
(73) Proprietor: PHILIPS ELECTRONICS NORTH AMERICA CORPORATION, New York, N.Y. 10017 (US)
(72) Inventor: Erhardt, Robert Alexander, NL-5656 AA Eindhoven (NL); Szuba, Stefan, NL-5656 AA Eindhoven (NL)
(74) Representative: Dusseldorp, Jan Charles

(56) References cited:
- EP-A- 0 271 396
- EP-A- 0 306 086
- EP-A- 0 314 077

## Description

This is an invention in the lighting art. More particularly it involves an arrangement for starting and operating a gas discharge lamp, specifically a metal halide lamp, from a direct current power source as indicated in the upper part of claim 1.

From EP-A-0 271 396 is known a circuit arrangement for starting and operating a neon type lamp. During starting a LC-tank circuit is provided with high frequency pulses, which frequency is continuously sweeped with constant rate around the resonance frequency of the LC-tank circuit.

The advantages of metal halide lamps are well known. They combine high luminous efficacy and good color rendition. Moreover, they provide high lighting power from a compact source. In the past such lamps took a considerable time to turn on and reach a significant level of light output. It was also difficult to "restrike" such lamps when they were still hot from prior operation.

It is an object of this invention to provide an arrangement which reduces the time it takes a metal halide lamp to "cold start" and reach a satisfactory level of light output.

One of the features of the invention is that it will "hot restrike" a metal halide lamp to reignite it any time after it has been turned off. The above object and this feature together render metal halide lamps, with all their many advantages, suitable for use as automobile headlamps.

One of the advantages of the invention is that it enables the control of power to a metal halide lamp during operation which is useful in minimizing color temperature differences between lamps.

Another advantage of the invention is that as lamps age and become blackened, power to them can be increased in order to maintain their light output. This extends the serviceable lifetime of lamps.

In accordance with the invention there is provided an arrangement comprising the features of claim 1.

Other objects, features and advantages of the invention will be apparent from the following description and appended claims when considered in conjunction with the accompanying drawing, in which:
Figure 1 is a block diagram of an arrangement featuring an electronic ballast with a discharge lamp;
Figure 2 is the structural embodiment of a transformer used in the arrangement of Figure 1;
Figure 3 is a graph plotting frequency against time representative of a high frequency sweep used in the arrangement of Figure 1;
Figure 4 is a graph of voltage against time representative of the manner in which the open circuit voltage applied to the electrodes of the lamp of Figure 1 is "pumped" to raise it to the necessary ignition voltage;
Figure 5 is a graph of power provided to the lamp of Figure 1 plotted against the voltage across the lamp after ignition;
Figure 6 is a simplified circuit diagram of a MOSFET bridge circuit used in the arrangement of Figure 1;
Figure 7 is a graph of representative waveforms (not to scale and with interruptions) of voltage (V) and current (I) across and through the lamp of Figure 1 just before and just after ignition; and
Figure 8 is a graph of typical waveforms used with the invention.

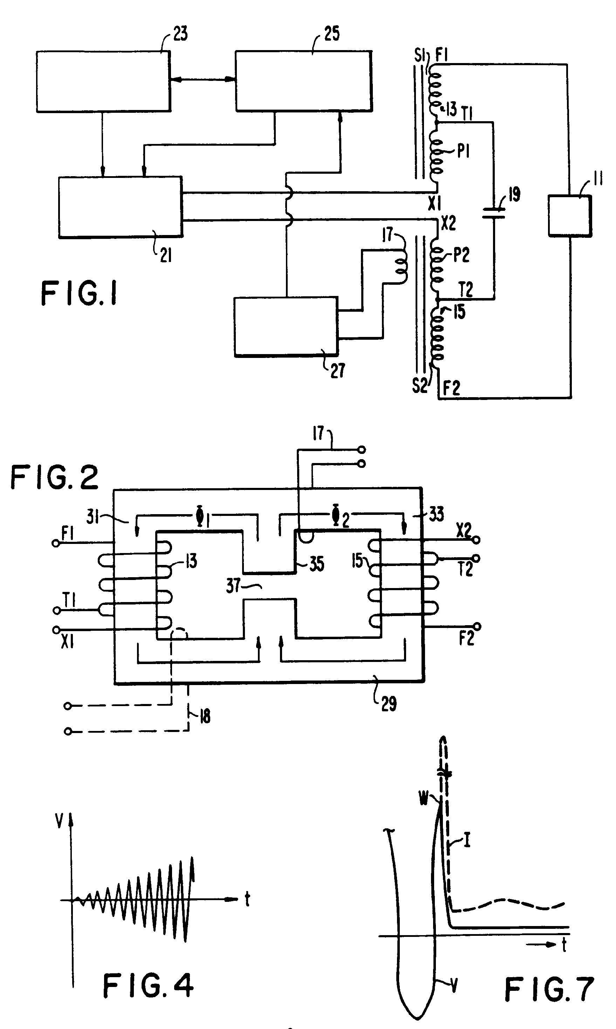

Referring to Figure 1, there is shown a gas discharge lamp 11 which in a constructed embodiment of the invention is an 85 volt, 35 watt miniature metal halide lamp. Such a lamp is disclosed in U.S. Patent No. 4,806,816. Lamp 11 is connected across two autotransformers 13 and 15. While two transformers are used in the constructed embodiment it is to be understood that one autotransformer could be used. Transformers 13 and 15 include primary windings P1 and P2 and secondary windings S1 and S2. Transformer 15 also includes a sensing coil 17. Transformers 13 and 15 will be further described with reference to Figure 2 hereinafter. Capacitor 19 is connected across primary windings P1 and P2. The primary windings are also connected to a commutating or switching device in the form of bridge circuit 21 which applies voltage to the LC tank circuit comprising autotransformers 13 and 15 and capacitor 19.

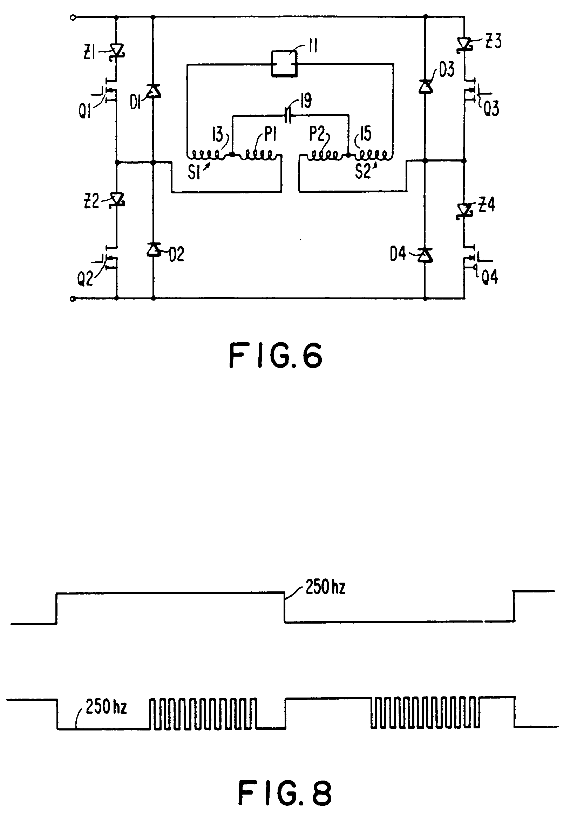

A simplified version of the bridge of the constructed embodiment is shown in Figure 6 and will be described hereinafter. For present purposes it is sufficient to know that bridge circuit 21 in the constructed embodiment comprises a full wave bridge including four power MOSFETs, Q1 through Q4 (Figure 6). Four diodes Z1 through Z4 are connected in series with the power MOSFETs. These protect against DV/DT failures of the MOSFETs internal parasitic diodes. An associated diode D1 through D4 is connected in parallel with each MOSFET and its series diode in reverse polarity to the series diode as anti-parallel devices for purposes to be described in connection with Figure 6.

Bridge circuit 21 is also connected to a power source represented by DC power source 23. In the constructed embodiment DC power source 23 comprises a flyback converter (of the type shown in Fig. 7.5 (C) of Severns and Bloom's "Modern DC-DC Switchmode Power Converter Circuits" except with only one output). The converter includes a 30 amp., 200 volt power MOSFET and a transformer with a 4.44 to 1 turns ratio. The power MOSFET and the transformer operate in the nature of a switchmode device at a frequency of 100 kHz to cause power source 23 to produce a variable voltage (between 40 and 300 volts) in response to the reception of a voltage of 12 volts, such as is provided by an automobile battery. A tapped inductor converter has been used successfully in place of the flyback converter. The turns ratio of the transformer used with this alternate converter was 2.4 to 1. In addition, it is also contemplated that a buck or boost converter or other types, such as, a Cuk converter could be used in place of the flyback converter.

Control circuits 25 are connected to source 23 to control the switching of its power MOSFET. Output signals from source 23 are fed back to control circuits 25 to control the triggering of bridge circuit 21. Among these output signals are signals representing the DC voltage and DC current being supplied to bridge circuit 21 by power source 23. Power source 23 is also controlled by these signals to control the power provided to lamp 11. Also connected to control circuits 25 is sensing circuit 27 which in turn is connected to sensing coil 17. It is contemplated that a second sensing coil, such as 18 (shown by dotted line in Figure 2), could be used as a refinement. If used, it would also be connected to sensing circuit 27. A second sensing coil was found not to be necessary in the constructed embodiment. Sensing circuit 27 provides control signals representing the voltage across lamp 11 during open circuit operation. These control signals and the DC voltage and DC current signals from source 23 are transmitted to control circuits 25 to control the operation of source 23 and bridge circuit 21.

Autotransformers 13 and 15 in the constructed embodiment have their primaries P1 and P2 and secondaries S1 and S2 wound on a ferrite core 29 (shown in Figure 2). Core 29 includes two outer legs on which the primary and secondary windings of transformers 13 and 15 are wound and an inner leg 35 with an air gap 37. Core 29 may be considered as comprising two E-shaped bodies with the upper and lower legs of each E contacting each other, respectively, and with the middle legs out of contact. Sensing coil 17 is wound around the top section of core 29. If sensing coil 18 is to be used it would be wound around the lower section of core 29, as shown. Alternatively, a single coil wound around the center leg of core 29 couls also be used.

As can be seen from Figure 2, transformer 13 includes a coil that starts at XI and is coiled around leg 31 until it reaches tap T1. The coil then continues around leg 31 until it reaches its end at F1. Coil 15 similarly includes a start at X2, a tap at T2 and an end at F2. It is coiled around leg 33. In the constructed embodiment, transformers 13 and 15 are 3:1 step up autotransformers.

With the arrangement shown in Figure 2, there is virtually no flux coupling of fluxes Φ₁ and Φ₂ of the coils of transformers 13 and 15. Moreover, with this arrangement of two separate transformers the voltage stress in each is half that of an equivalent single transformer. Consequently, the insulation problems are not as critical. In addition, with this arrangement the voltage at the terminals of capacitor 19 is approximately one third the voltage which can be produced at the terminals of lamp 11. Moreover, this arrangement produces two electromagnetic fields, one emanating from each electrode of lamp 11. These fields offset each other and, as those skilled in the art will understand, the resultant field is considerably smaller than either of its components.

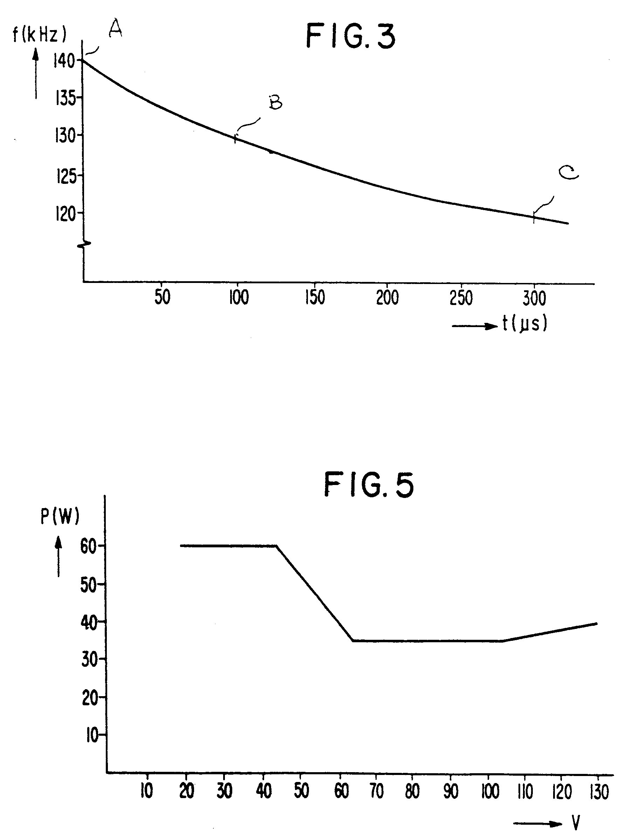

In operation, control circuits 25 cause bridge circuit 21 to be commutated or switched at a low frequency of 250 hertz. However, modulated on this 250 hertz signal and applied to one half of the bridge circuit 21 is a frequency sweep. The half of the bridge circuit to which this frequency sweep is applied is MOSFETs Q1 and Q2 (Figure 6). The sweep starts at a frequency above the resonant frequency of the LC circuit formed by transformers 13 and 15 and capacitor 19 and sweeps downwardly toward that resonant frequency with such frequency sweep varying in time in accordance with that shown in the graph of Figure 3. This causes the LC circuit to produce an open circuit lamp voltage across the terminals of lamp 11 which varies in time in accordance with the graph shown in Figure 4. This high frequency sweep is started at about the midpoint of each half cycle of the 250 hertz signal and ends before the end thereof if ignition does not occur (see Figure 8).

In the constructed embodiment, the resonant frequency of the LC tank circuit is about 120 kilohertz. The frequency sweep as illustrated in Figure 3 starts at about 140 kilohertz (point A) and descends continuously in a time period of .1 milliseconds to 130 kilohertz (point B on Figure 3) . The frequency then decreases continuously from 130 kilohertz to 120 kilohertz (point C Figure 3) in .20 milliseconds. This "pumps" the tank circuit to produce across lamp 11 an open circuit voltage as represented in Figure 4.

Upon the open circuit voltage V (solid line in Figure 7) reaching the expected ignition voltage (at point W in Figure 7), lamp 11 ignites. As shown in Figure 7, in the constructed embodiment this is designed to occur while the voltage is increasing in magnitude during one of its cycles. This was done to insure that ignition will continue because while the voltage is increasing the magnetic structure of the auto transformers possesses a significant level of energy. In response to ignition, the voltage across lamp 11 decreases rapidly. The current I (dotted line Figure 7) through lamp 11 initially increases rapidly as a result of the energy stored in capacitor 19. Shortly after voltage V across lamp 11 starts to decrease and current I through it also starts to decrease.

After ignition, the voltage monitoring means and the current sensing means of control circuits 25 respond to voltage and current outputs of power source 23 and produce signals signifying them. Both signals are applied to power source 23 and it responds to cause the system to apply 60 watts to lamp 11 which immediately after agnition has a voltage drop across it of about 20 volts, as shown in figure 5. The application of 60 watts of power to lamp 11 continues in response to the feed back signals from the voltage monitoring means and the current sensing means until the signal from the voltage monitoring means signifies that the voltage across lamp 11 has reached 45 volts. Thereafter, the two feed back signals cause power source 23 to reduce the power it supplies continuously until it levels off at 35 watts. This occurs when the voltage monitoring means signifies that the voltage across lamp 11 is 65 volts. The 35 watt power is then continued while lamp 11 remains on except for lamp aging as described later.

In this way, lamp 11 is forced into rapid luminescence. It is to be understood that control circuits 25 respond to the ignition of lamp 11 to cause the high frequency sweep to cease at the end of the half cycle of the 250 hertz signal during which ignition occurs.

If lamp 11 doesn't ignite notwithstanding the open circuit voltage across it exceeds its expected ignition voltage sensing circuit 27 receives a signal indicating this condition from sensing coil 17. Sensing circuit 27 thereupon sends a signal to control circuits 25 to cease the sweeping operation for that half cycle of the 250 hertz signal. Since lamp 11 has not ignited the sweeping operation will be repeated during the next half cycle of the 250 hertz signal applied to MOSFET Q1 or Q2 of bridge circuit 21.

Although a feedback system as described above has been employed in the constructed embodiment it is to be understood that a replacement therefor is possible. In this regard, a capacitance discharge circuit with a decaying signal which simulates in the proper time period the decrease in power applied to lamp 11 has also been employed satisfactorily as part of DC source 23.

One of the advantages of the foregoing feedback arrangement is that provisions can be made to offset the decreased luminescence of a lamp as it ages. In aging a lamp loses efficacy and the voltage across it increases. This increased voltage is reflected by the voltage output of DC source 23. In response to feedback signals of the voltage and current provided by source 23 to bridge circuit 21 produced by control circuits 25, source 23 can be caused to increase its power output and compensate accordingly. In this regard, Figure 5 shows that as lamp 11 voltage increases above 105 volts it is possible to increase lamp wattage continuously until it reaches 40 watts at 130 volts. In addition, variations in performance between different lamps can also be compensated for by using the feedback voltage and current to control power to each lamp.

The simplified bridge circuit arrangement of Figure 6 illustrates how the bridge circuit in the constructed embodiment is employed to try and maintain the output voltage of DC source 23 above a predetermined minimum when the lamp voltage is low during its "warm up" period. As indicated previously, transistors Q3 and Q4 are those being switched at the 250 Hz rate only, both before ignition and after. Before ignition, transistors Q1 and Q2, as explained, are subjected to the previously described frequency sweep. After ignition the frequency sweep continues until the end of the half cycle of the 250 Hz signal during which ignition occurs.

After ignition and during warm up to full luminescence, the supply of power by DC source 23 causes its output voltage to decrease and it output current to increase. This is similar to the manner in which the voltage and current across and through lamp 11 vary as shown in Figure 7. In order to prevent an excessive current demand on source 23 the voltage monitoring means of control circuits 25 monitors the magnitude of the voltage provided by source 23 during warm up. If this voltage drops below a predetermined minimum the monitoring means responds to produce a signal which turns off that one of transistors Q1 or Q2 which is conducting during the half cycle of the 250 Hz signal then being received. Assuming this to be transistor Q1, when it is turned off transformers 13 and 15 attempt to maintain the same current flowing through them. This causes current to flow through anti-parallel diode D2, the LC circuit of transformers 13 and 15 and capacitor 19, lamp 11, diode 24 and transistor Q4. In this respect the bridge operates as a "buck" or "down" converter. With transistor Q1 off DC source 23 no longer applies current to bridge 21 and as a consequence the voltage available at the output of source 23 increases.

The voltage monitoring means of control circuits 25 is itself monitored at a rate of 100 Khz in synchronism with the 100 Khz rate at which the converter of source 23 operates. If the voltage monitoring means signals that the voltage at the output of source 23 is above the forementioned predetermined magnitude during any cycle of the 100 Khz signal the associated transistor Q1 or Q2 stays on or is turned on. If the voltage at the output of source 23 is indicated by the voltage monitoring means to be below the forementioned predetermined magnitude the associated transistor Q1 or Q2 stays off or is turned off. In this way the current through the power MOSFET of the converter of source 23 is limited to acceptable magnitudes. It is to be understood that the voltage monitoring means could be monitored by a clock signal with a frequency other than 100 KHz.

It is also to be understood that the system shown in Figure 1 enables "hot restrike". This is because the voltage generated at terminals F1 and F2 is of the order of 12 kilovolts notwithstanding the voltage at terminals T1 and T2 in the constructed embodiment never exceeds about 4 kilovolts. A voltage of 12 kilovolts when applied by the constructed embodiment is capable of "restriking" lamp 11 at any time after it is shut off.

It is further to be understood that while a tank circuit comprising autotransformers 13 and 15 and capacitor 19 has been described, an alternative embodiment was also constructed and tested using a simple LC tank circuit with suitable modifications to the commutating frequency and the frequency sweep rate.

It should be apparent that various modifications of the above will be evident to those skilled in the art and that the arrangement described herein is for illustrative purposes and is not to be considered restrictive.

## Claims

1. An arrangement for starting and operating a gas discharge lamp (11) by providing power thereto, suitable to be operated from a d.c. power source (23), said arrangement including an LC circuit (13,15,19) having a predetermined resonant frequency to be connected to said lamp, a commutating device (21) connected to said LC circuit and applying voltage to it, said commutating device to be connected to the d.c. power source, low frequency means (25) connected to said commutating device causing said commutating device to switch the voltage it applies to said LC circuit at a low frequency relative to said resonant frequency, and a high frequency means (27,25) connected to said commutating device causing said commutating device to switch the voltage it applies to said LC circuit at a frequency higher than said resonant frequency which causes said LC circuit to apply high voltage to said lamp to ignite it, wherein the high frequency means causes said commutating device to switch the voltage it applies to said LC circuit at a frequency which decreases in time, characterized in that the high frequency means is provided with means to decrease the frequency with which the voltage is applied to the LC-circuit in a first period with a first rate and in a second period with a second rate, and wherein the first rate of decrease is higher than the second rate of decrease.

2. An arrangement as claimed in Claim 1, wherein said LC circuit includes two autotransformers (13,15) each with a plurality of coils, said autotransformers including a core (29) with two outer legs and an inner leg (35), wherein the coils of each autotransformer are wrapped around an associated outer leg of said core and wherein the inner leg of said core includes an air gap (37).

3. An arrangement according to Claim 2, wherein a sensing coil (17) is wrapped around the core of said autotransformers for sensing the voltage applied across said lamp and for interrupting the high frequency switching of the voltage applied to said LC circuit if said sensing coil senses a predetermined voltage above an expected ignition voltage for said lamp.

4. An arrangement according to Claim 3, wherein said commutating device is a bridge circuit (21) and wherein the signal from said sensing coil upon sensing said predetermined voltage across said lamp causes said high frequency means to stop applying voltage to said bridge circuit.

5. An arrangement as claimed in any of Claims 1 to 4, including control circuits having both voltage monitoring means (17,25,27) for monitoring the magnitude of the voltage applied by said power source to said commutating device and producing a signal representing that magnitude and current sensing means for sensing the magnitude of the current applied by said power source to said commutating device and producing a signal representing that magnitude, said control circuits being connected to said power source and controlling the power said arrangement can apply to said lamp in accordance with the signals produced by said voltage monitoring means and said current sensing means.

6. An arrangement as claimed in any of Claims 1 to 5, including control circuits having a voltage monitoring means for sensing the magnitude of the voltage applied by said power source to said commutating device and producing a signal representing that magnitude, said control circuits being connected to said high frequency means and controlling said high frequency means to stop switching said commutating device at said high frequency at the end of the next cycle of said low frequency when said signal from said voltage monitoring means indicates that said lamp has ignited.

7. An arrangement as claimed in Claim 1 to 6, wherein said commutating means is a bridge circuit and wherein said voltage monitoring means is connected to said bridge circuit to stop it from providing voltage to said LC circuit after the lamp ignites when said signal from said voltage monitoring means indicates that the voltage from said direct current power source is below a predetermined magnitude.

8. An arrangement as claimed in any of Claims 1 to 7, including control circuits having a capacitance discharge circuit, said control circuits being connected to said power source and controlling the power said arrangement can apply to said lamp in accordance with the decaying signal produced by said capacitance discharge circuit.

9. An arrangement as claimed in any of Claims 1 to 8, including control circuits responsive to lamp ignition and connected to said high frequency means for controlling said high frequency means to stop switching said commutating device at said high frequency at the end of the next cycle of said low frequency voltage after lamp ignition.

## Patentansprüche

1. Anordnung zum Starten und Betreiben einer Gasentladungslampe (11) durch Leistungsversorgung an die Lampe, geeignet zum Betreiben von einer Gleichspannungsleistungsquelle (23) aus, wobei die Anordnung einen LC-Kreis (13, 15, 19) mit einer vorgegebenen Resonanzfrequenz nach der Lampe, eine Kommutierungseinrichtung (21) in Verbindung mit dem LC-Kreis und zur Lieferung von Spannung and den Kreis, wobei die Kommutierungseinrichtung an die Gleichspannungsleistungsquelle angeschlossen wird, an die Kommutierungseinrichtung angeschlossene Niederfrequenzmittel (25) zum Schalten der Spannung von der Kommutierungseinrichtung an den LC-Kreis mit einer niedrigen Frequenz in bezug auf die Resonanzfrequenz, und ein Hochfrequenzmittel (27, 25) in Verbindung mit der Kommutierungseinrichtung enthält, wodurch die Kommutierungseinrichtung die Spannung an den LC-Kreis mit einer höheren Frequenz als die Resonanzfrequenz schaltet, wodurch der LC-Kreis hohe Spannung an die Lampe zum Zünden legt, worin das Hochfrequenzmittel die Kommutierungseinrichtung zum Schalten der Spannung an den LC-Kreis mit einer Frequenz bringt, die zeitlich abfällt, dadurch gekennzeichnet, daß das Hochfrequenzmittel mit Mitteln zum Senken der Frequenz versehen ist, mit der die Spannung an den LC-Kreis in einer ersten Periode mit einer ersten Geschwindigkeit und in einer zweiten Periode mit einer zweiten Geschwindigkeit gelegt wird, und worin die erste Abfallgeschwindigkeit höher ist als die zweite Abfallgeschwindigkeit.

2. Anordnung nach Anspruch 1, worin der LC-Kreis zwei Autotransformatoren (13, 15) mit je einer Anzahl von Spulen enthält, und diese Autotransformatoren einen Kern (29) mit zwei Außenschenkeln und einem Innenschenkel (35) enthalten, worin die Spulen jedes Autotransformators um einen zugeordneten Außenschenkel des Kerns gewickelt sind und worin der Innenschenkel des Kernes einen Luftspalt (37) enthält.

3. Anordnung nach Anspruch 2, worin eine Abtastspule (17) um den Kern der Autotransformatoren zum Abtasten der Spannung an der Lampe und zum Unterbrechen der Hochfrequenzschaltvorgänge der Spannung an den LC-Kreis gewickelt ist, wenn die Abtastspule eine vorgegebene Spannung höher als eine erwartete Zündspannung für die Lampe mißt.

4. Anordnung nach Anspruch 3, worin die Kommutierungseinrichtung eine Brückenschaltung (21) ist, und worin die Schaltung aus der Abtastspule beim Messen der vorgegebenen Spannung an der Lampe dafür sorgt, daß ein Hochfrequenzmittel die Zufuhr von Spannung an die Brückenschaltung stoppt.

5. Anordnung nach einem der Ansprüche 1 bis 4, mit Steuerschaltungen, die sowohl Spannungsüberwachungsmittel (17, 25, 27) zum Überwachen der Größe der Spannung aus der Leistungsquelle an die Kommutierungseinrichtung enthält und ein Signal zur Darstellung dieser Größe erzeugt, und mit einem Stromabtastmittel zum Abtasten der Größe des Stromes aus der Leistungsquelle an die Kommutierungseinrichtung und zum Erzeugen eines diese Größe darstellenden Signals, wobei die Steuerschaltungen mit der Leistungsquelle verbunden sind und die Leistung steuern, die die Anordnung entsprechend der Signale aus den Spannungsüberwachungsmitteln und dem Stromüberwachungsmittel an die Lampe legen kann.

6. Anordnung nach einem der Ansprüche 1 bis 5, mit Steuerschaltungen, die Spannungsüberwachungsmittel zum Abtasten der Größe der Spannung aus der Leistungsquelle an die Kommutierungseinrichtung enthalten und ein Signal zur Darstellung dieser Größe erzeugt, wobei die Steuerschaltungen mit dem Hochfrequenzmittel verbunden ist und das Hochfrequenzmittel derart steuert, daß das Schalten der Kommutierungseinrichtung bei dieser hohen Frequenz am Ende des folgenden Zyklus der niedrigen Frequenz einstellt, wenn das Signal aus den Spannungsüberwachungsmitteln angibt, daß die Lampe gezündet hat.

7. Anordnung nach Anspruch 1 bis 6, worin das Kommutierungseinrichtung eine Brückenschaltung ist, und worin die Spannungsüberwachungsmittel mit der Brückenschaltung verbunden ist, um zu verhindern, daß Spannung an den LC-Kreis nach dem Zünden der Lampe geführt wird, wenn das Signal aus den Spannungsüberwachungsmitteln angibt, daß die Spannung aus der Gleichstromleistungsquelle unter einer vorgegebenen Größe liegt.

8. Anordnung nach einem der Ansprüche 1 bis 7, mit Steuerschaltungen, die eine Kapazitätsentladungsschaltung enthalten, wobei die Steuerschaltungen mit der Leistungsquelle verbunden sind und die Leistung steuern, die die Anordnung entsprechend dem abklingenden Signal aus der Kapazitätsentladungsschaltung an die Lampe legen kann.

9. Anordnung nach einem der Ansprüche 1 bis 8, mit Steuerschaltungen, die auf die Lampenzündung ansprechend und mit dem Hochfrequenzmittel zum Steuern der Hochfrequenzmittel verbunden sind, um das Schalten der Kommutierungseinrichtung bei der hohen Frequenz am Ende des folgenden Zyklus der Niederfrequenzspannung nach der Lampenzündung einzustellen.

## Revendications

1. Circuit pour amorcer et faire fonctionner une lampe à décharge dans le gaz (11) par l'application de puissance à ladite lampe qui convient à fonctionner au moyen d'une source de courant continu (23), ledit circuit comportant un circuit LC (13, 15, 19) présentant une fréquence de résonance prédéterminée à relier à ladite lampe, un dispositif de commutation (21) relié audit circuit LC et appliquant une tension audit circuit, ledit dispositif de commutation à relier à la source de courant continu, des moyens basse fréquence (25) reliés audit dispositif de commutation forçant ledit dispositif de commutation de commuter la tension qu'il applique audit circuit LC à une fréquence basse relative à ladite fréquence de résonance, et des moyens haute fréquence (27,5) reliés audit dispositif de commutation forçant ledit dispositif de commutation de commuter la tension qu'il applique audit circuit LC à une fréquence supérieure à ladite fréquence de résonance qui provoque que ledit circuit LC applique une tension élevée à ladite lampe pour amorcer celle-ci, dans lequel les moyens haute fréquence forcent ledit dispositif de commutation de commuter la tension qu'il applique audit circuit LC à une fréquence qui diminue dans le temps, caractérisé en ce que les moyens haute fréquence sont munis de moyens conçus pour réduire la fréquence avec laquelle la tension est appliquée au circuit LC dans une première période avec une première vitesse et dans une deuxième période avec une deuxième vitesse, la première vitesse de réduction étant supérieure à la deuxième vitesse de réduction.

2. Circuit selon la revendication 1, dans lequel ledit circuit LC comporte deux autotransformateurs (13, 15) chacun muni d'une pluralité de bobines, lesdits autotransformateurs comportant un noyau (29) présentant deux branches extérieures et une branche intérieure (35), les bobines de chaque autotransformateur étant enroulées autour d'une branche extérieure associée audit noyau et la branche intérieure dudit noyau comportant une fente d'air (37).

3. Circuit selon la revendication 2, dans lequel une bobine de mesure (17) est enroulée autour du noyau desdits autotransformateurs pour mesurer la tension appliquée aux bornes de ladite lampe et pour interrompre la commutation haute fréquence de la tension appliquée audit circuit LC si ladite bobine de mesure mesure une tension prédéterminée supérieure à une tension d'amorçage attendue pour ladite lampe.

4. Circuit selon la revendication 3, dans lequel ledit dispositif de commutation est un circuit en pont (21) et dans lequel le signal provenant de ladite bobine de mesure force lorsqu'il mesure ladite tension prédéterminée aux bornes de ladite lampe que les moyens haute fréquence d'arrêter l'application de tension audit circuit en pont.

5. Circuit selon l'une quelconque des revendications 1 à 4, comportant des circuits de contrôle présentant tous les deux des moyens de contrôle de tension (17, 25, 27) pour contrôler la valeur de la tension appliquée par ladite source de puissance audit dispositif de commutation et engendrant un signal représentant ladite valeur, et des moyens de mesure de courant pour mesurer la valeur de courant appliquée par ladite source de puissance audit dispositif de commutation et engendrant un signal représentant ladite valeur, lesdits circuits de contrôle étant reliés à ladite source de puissance et contrôlant la puissance que ledit circuit peut appliquer à ladite lampe en conformité avec les signaux engendrés par lesdits moyens de contrôle de tension et de mesure de courant.

6. Circuit selon l'une quelconque des revendications 1 à 5, comportant des circuits de contrôle présentant des moyens de contrôle de tension pour mesurer la valeur de la tension appliquée par ladite source de puissance audit dispositif de commutation et engendrant un signal représentant cette valeur, lesdits circuits de contrôle étant reliés auxdits moyens haute fréquence et contrôlant lesdits moyens haute fréquence pour arrêter la commutation dudit dispositif de commutation à ladite haute fréquence, à la fin du cycle suivant de ladite basse fréquence lorsque ledit signal provenant desdits moyens de contrôle de tension indique l'amorçage de ladite lampe.

7. Circuit selon l'une des revendications 1 à 6, dans lequel lesdits moyens de commutation constituent un circuit en pont et dans lequel lesdits moyens de contrôle de tension sont reliés audit circuit en pont pour l'arrêter de fournir de la tension audit circuit LC après que la lampe est amorcée lorsque ledit signal provenant desdits moyens de contrôle de tension indique que la tension provenant de ladite source de courant continu est inférieure à une valeur prédéterminée.

8. Circuit selon l'une quelconque des revendications 1 à 7, comportant des circuits de contrôle présentant un circuit de décharge de capacité, lesdits circuits de contrôle étant reliés à ladite source de puissance et contrôlant la puissance que ledit circuit peut appliquer à ladite lampe en conformité avec un signal de réduction engendré par ledit circuit de décharge de capacité.

9. Circuit selon l'une quelconque des revendications 1 à 8, comportant des circuits de contrôle réagissant à un amorçage de lampe et reliés auxdits moyens haute fréquence pour contrôler lesdits moyens haute fréquence d'arrêter la commutation dudit dispositif de commutation à ladite haute fréquence à la fin du cycle suivant de ladite tension basse fréquence après l'amorçage de lampe.
